# EUROPÄISCHE PATENTSCHRIFT

(11) **EP 1 154 208 B1**
(45) Veröffentlichungstag und Bekanntmachung des Hinweises auf die Patenterteilung: **22.09.2004**
(21) Anmeldenummer: 01110978.2
(22) Anmeldetag: 07.05.2001
(51) Int. Cl.: F25B 17/08, F16L 37/36

(54) **Verfahren und Vorrichtung zum Kühlen**
Refrigeration method and device
Procédé et dispositif de réfrigération

(30) Priorität: 13.05.2000 DE 10023650
(43) Veröffentlichungstag der Anmeldung: 14.11.2001
(73) Patentinhaber: Patzner, Norbert, Dipl.-Ing., Dipl.-Wirtsch.-Ing., 97980 Bad Mergentheim (DE); Hammer, Rolf, 97980 Bad Mergentheim (DE)
(72) Erfinder: Patzner, Norbert, 97980 Bad Mergentheim (DE)
(74) Vertreter: Schieferdecker, Lutz, Dipl.-Ing.

(56) Entgegenhaltungen:
- EP-A- 0 577 869
- BE-A- 428 460
- DE-A- 2 209 742
- DE-A- 4 403 360
- DE-C- 457 681
- DE-C- 579 991
- DE-C- 905 357
- DE-U- 9 311 614
- FR-A- 2 489 488
- US-A- 4 126 016

## Beschreibung

Die Erfindung betrifft ein Verfahren und eine Vorrichtung zum Kühlen mit Hilfe eines Adsorptionsmittels nach dem Oberbegriff des Anspruchs 1 bzw. des Anspruchs 3.

Eine Vorrichtung der genannten Art ist aus der EP 0 577 869 B1 bekannt. Sie betrifft ein Kühlsystem mit einer vakuumdichten Arbeitsmitteldampf-Sammelleitung, an der mehrere Anschlußstellen für entsprechend viele, Kälte erzeugende Verdampfer vorgesehen sind. Zusätzlich sollen weitere Anschlußstellen zum auswechselbaren Anschließen beliebiger weiterer Verdampfer dienen, wobei die nicht mit einem Verdampfer belegten Anschlußstellen vakuumdicht verschlossen sind.

Ferner ist es aus der EP 0 577 869 B1 bekannt, dass der das Adsorptionsmittel enthaltende Behälter leicht lösbare Verschlüsse aufweist, die ein Auswechseln der gesättigten Adsorptionsmittelfüllung durch eine frisch regenerierte Füllung auf einfache Weise gestattet.

Die bekannte Vorrichtung arbeitet grundsätzlich zufriedenstellend. Dennoch ist die Handhabung aufwendig und nicht ganz unproblematisch. Der Erfindung liegt daher die Aufgabe zugrunde, die Handhabung und Brauchbarkeit zu verbessern und darüber hinaus den Energieverbrauch der Vorrichtung zu minimieren.

Zur Lösung dieser Aufgabe sieht die Erfindung ein Verfahren gemäß dem Kennzeichenden Teil der Anspruchs 1 vor.

Ein Trennen von Komponenten zum Regenerieren des Adsorptionsmittels und ein Verbinden von Komponenten für einen neuen Adsorptionszyklus derart, dass Luft aus der umgebenden Atmosphäre nicht in die Komponenten bzw. in die sie verbindenden Leitungen gelangen kann, gestattet eine Verfahrensführung in einem gleichsam geschlossenen Betriebskreislauf. Dieser geschlossene Betriebskreislauf soll vorzugsweise permanent unter dem Atmosphärendruck liegen und gestattet dann eine nicht unerhebliche Energieeinsparung. Dies gilt sowohl für den jeweils benötigten Unterdruck zwischen Verdampfer und Reaktor bei der Adsorption und ferner auch zwischen Reaktor und Kondensator, wenn nämlich ein Unterdruck auch im Kondensator bei der Desorption zweckmäßig ist.

Die Vorrichtung zur Durchführung der Erfindung sieht vor, dass die Komponenten mindestens teilweise einzeln und/oder in Gruppen druckdicht bzw. vakuumdicht und unter Luftabschluß miteinander verbindbar und voneinander lösbar sind. Dies geschieht mit Hilfe von totraumfreien Kupplungen in mindestens einzelnen der die Komponenten verbindenden Leitungen.

Die Erfindung wird nachstehend an Hand von Ausführungsbeispielen, die in der Zeichnung dargestellt sind, näher beschrieben.

Dabei zeigen:
- Fig. 1:: eine Blockschaltbild der Vorrichtung;
- Fig. 2:: ein Blockschaltbild von zu einer Einheit in Gestalt einer Patrone zusammengefassten Komponenten, bestehend aus wenigstens einem Adsorber und einem Wasservorratsbehälter mit Kondensator;
- Fig. 3:: eine schematische Darstellung einer aus zwei miteinander verbundenen Kupplungshälften bestehenden Kupplung in geschlossenem Zustand;
- Fig. 4:: eine Darstellung der Kupplung wie in Fig. 3 in geöffnetem Zustand;
- Fig. 5:: eine Darstellung wie in den Figuren 3 und 4, wobei die beiden Kupplungshälften jeweils geschlossen und voneinander getrennt sind;
- Fig. 6:: eine schematische Darstellung des Wasservorratsbehälters im Schnitt;
- Fig. 7:: im kleineren Maßstab sowie im Schnitt eine schematische Darstellung mit wesentlichen Teilen des Adsorbers;
- Fig. 8:: eine Darstellung wie in Fig. 7 in einer anderen Ebene;
- Fig. 9:: ein Diagramm mit mehreren Verdampfern und mehreren Adsorbern sowie zugehörigen Kondensatoren einschließlich Wasservorratstanks und
- Fig. 10:: ein Diagramm mit einem Verdampfer und mehreren Adsorbern sowie zugehörigen Kondensatoren und Wasservorratstanks.

Eine Vorrichtung 1 zum Kühlen mit Hilfe eines Adsorbtionsmittels 2 wie z. B. mit Hilfe von Zeolith und unter Verwendung eines Verdampfungsmittels 3 wie z. B. von Wasser umfaßt mindestens einen Adsorber 4 und einen Verdampfer 5, die mit Hilfe von mindestens einer Leitung 6 in Gestalt einer Dampfleitung miteinander verbunden sind. Eine weitere, wesentliche Komponente der Vorrichtung 1 ist ein Wasservorratsbehälter 7 mit einem zugeordneten bzw. integrierten Kondensator 8 für Wasserdampf.

Das Adsorptionsmittel 2 befindet sich in einem einen Reaktor bildenden Behälter 9, der eine Öffnung 10 aufweist. Das Innere des Behälters 9 ist über eine Leitung 11 in Gestalt einer Dampfleitung mit dem Wasservorratsbehälter 7 bzw. dem Kondensator 8 verbunden. In der Leitung 11 befindet sich ein Rückschlagventil 12 bzw. eine Einrichtung, die sicherstellt, dass Wasserdampf nur aus dem Adsorber 4 in den Wasservorratsbehälter 7 und seinen Kondensator 8 und nicht umgekehrt strömen kann.

Der Wasservorratsbehälter 7 ist über eine Leitung 13 in Gestalt einer Wasserleitung mit dem Verdampfer 5 verbunden, wobei sich die Austrittsöffnung 14 dieser Leitung zweckmäßigerweise im Verdampfer 5 unterhalb von dessen Wasserspiegel befindet.

Sowohl die an eine Öffnung 15 des Verdampfers 5 angeschlossene und zum Reaktor bzw. Adsorber 4 führende Leitung 6 als auch die Leitung 13 weisen je eine aus zwei Kupplungshälften 16 und 17 bestehende Kupplung 18 bzw. 19 derart auf, dass der Verdampfer 5 mit dem Adsorber 4 bzw. mit dem Wasservorratsbehälter 7 und seinem Kondensator 8 druckdicht und unter Luftabschluß verbunden und von diesen auch druckdicht und unter Luftabschluß getrennt werden kann. Es ist daher möglich, den Adsorber 4 und den Wasservorratsbehälter 7 mit seinem Kondensator 8 als Komponenten der Vorrichtung 1 von dem Verdampfer 5 unter Beibehaltung der in diesen Komponenten herrschenden Drücke (Vakuum, niedrige Drücke) zu trennen und z. B. nach einer Regenration des Adsorptionsmittels 2 im Adsorber 4 und nach Verflüssigung des aus dem Adsorber 4 bei der Desorption ausgetriebenen Wasserdampfes im Kondensator 8 des Wasservorratsbehälters 7 wieder mit dem Verdampfer 5 zu verbinden. Der Adsorber 4 und der Wasservorratsbehälter 7 mit seinem Kondensator 8 bilden dabei eine in sich geschlossene Einheit und grundsätzlich Gleiches gilt für den Verdampfer 5 mit seinen bis zu den Kupplungshälften 16 führenden Leitungen 6 und 13.

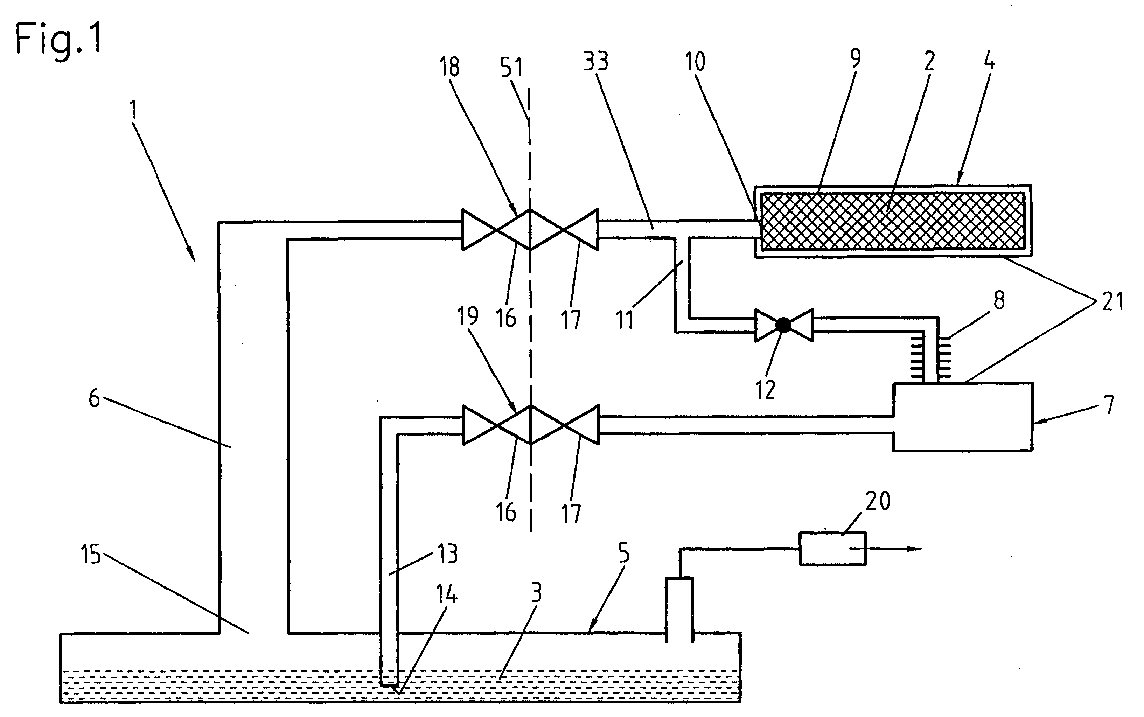

Ein Unterdruckerzeuger 20 ist ebenfalls vorgesehen und in geeigneter Weise z. B. an dem Verdampfer 5 angeschlossen, wie dies schematisch aus Fig. 1 hervorgeht.

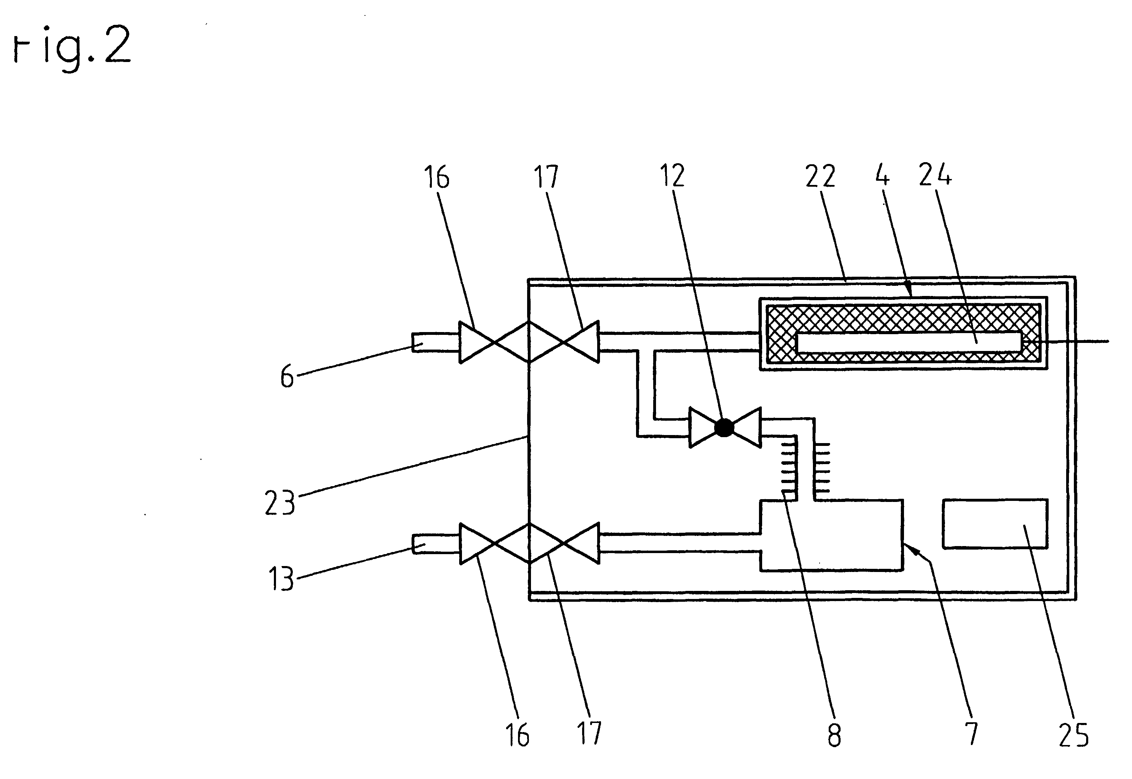

Die aus Adsorber 4 und Wasservorratsbehälter 7 bzw. Kondensator 8 bestehenden Komponenten bilden zweckmäßigerweise nicht nur eine Einheit 21 gemäß Fig. 1, die gemeinsam über Kupplungen 18 und 19 mit dem Verdampfer 5 verbindbar bzw. von diesem lösbar sind, sondern sie sind gemäß Fig. 2 zweckmäßigerweise auch innerhalb eines eine Patrone bildenden Gehäuse 22 angeordnet. Beide zu dem Adsorber 4 und zu dem Wasservorratsbehälter 7 mit seinem Kondensator 8 gehörende Kupplungshälften 17 befinden sich an der einen Stirnseite 23 des Gehäuses 22 und sind dort mit den anderen Kupplungshälften 16 verbindbar, die zu den Leitungen 6 bzw. 13 gehören.

Ferner zeigt Fig. 2, dass eine Heizung 24 z. B. in Gestalt einer elektrischen Heizung dem Adsorber 4 zugeordnet sein kann. Ferner kann auch eine Steuereinrichtung 25 für die Heizung 24 in dem die Patrone bildenden Gehäuse 22 angeordnet sein, wie dies lediglich schematisch in Fig. 2 angedeutet ist.

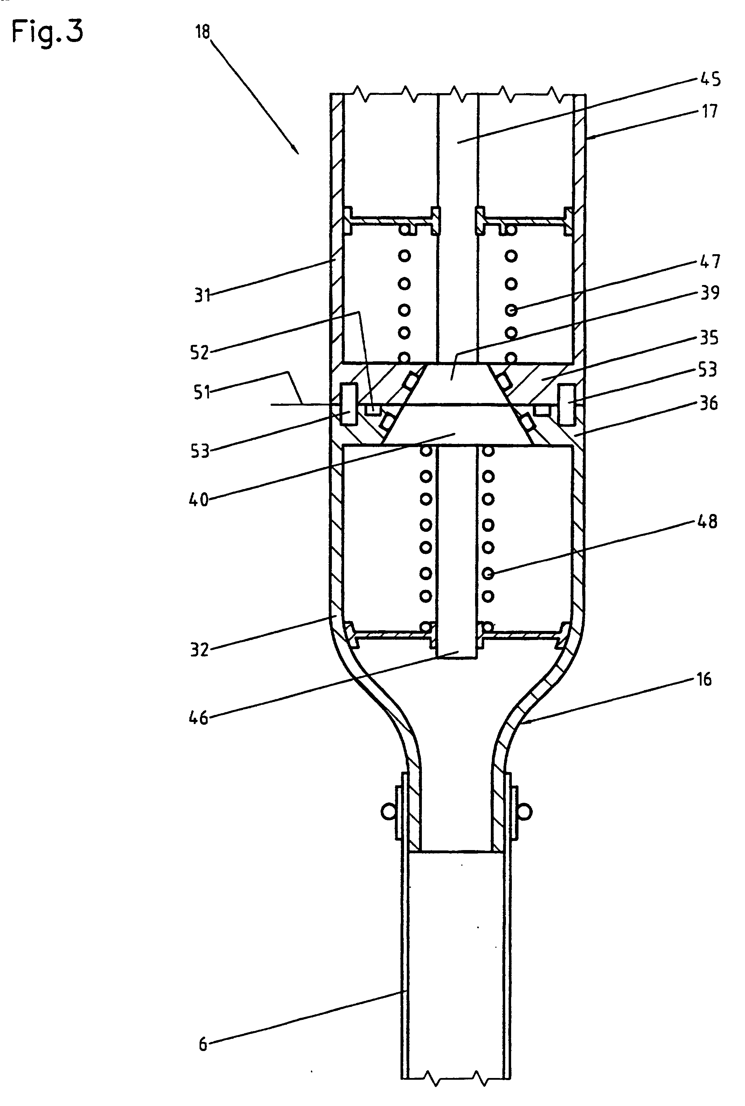

Der Aufbau und die Funktion der beiden Kupplungen 18 bzw. 19 sind am Beispiel der Kupplung 18 in den Figuren 3 bis 5 dargestellt.

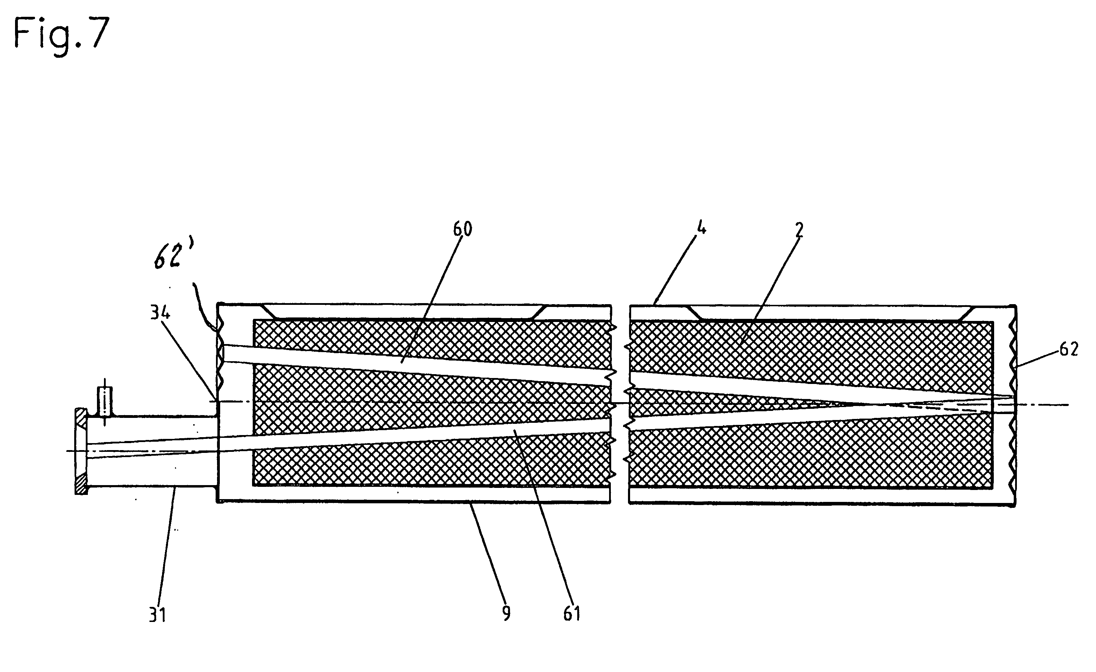

Jede der beiden Kupplungshälften 16 und 17 der Kupplung 18 weist ein Gehäuseteil 31 bzw. 32 auf, die in hier nicht interessierender Weise unmittelbar in die Leitung 6 bzw. in ein zum Adsorber 4 führendes Leitungsstück 33 oder unmittelbar in eine stirnseitige Wand 34 des das Adsorptionsmittel 2 enthaltenden Behälter 9 (Fig. 7) übergeht. Entsprechendes gilt grundsätzlich auch für die zweite Kupplung 19.

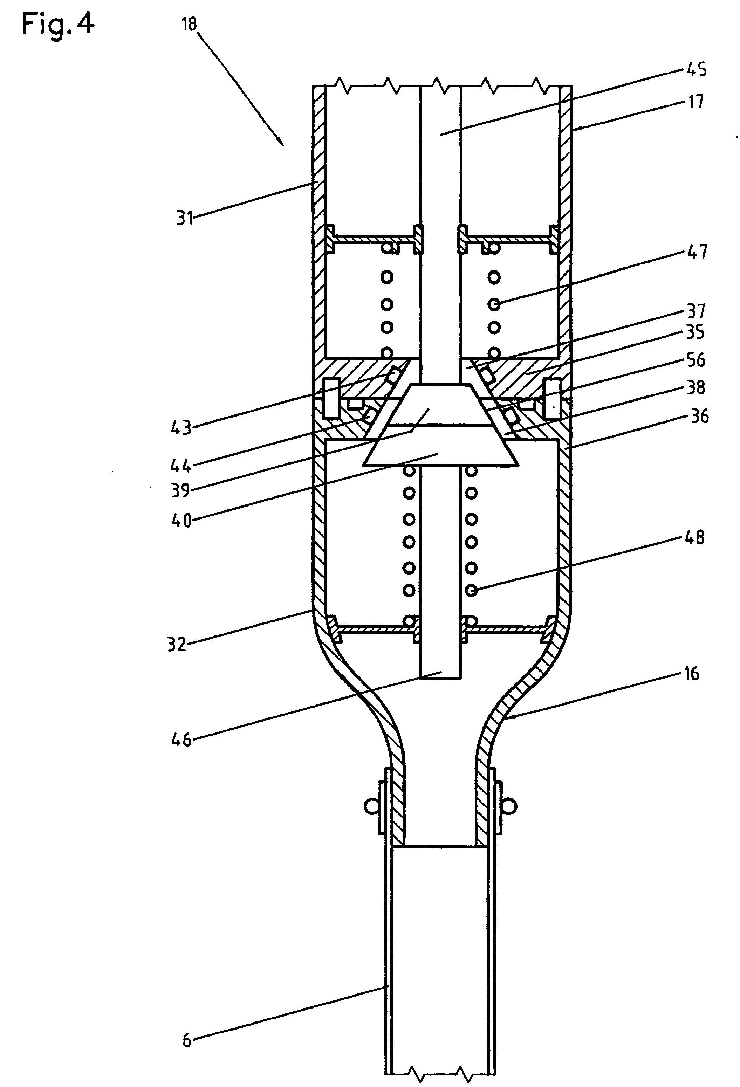

Jede Kupplung 18, 19 ist derart gestaltet, dass die zu den beiden Kupplungshälften 16 und 17 gehörenden Komponenten druckdicht und unter Luftabschluß miteinander verbindbar und voneinander lösbar sind. Dazu weist jede Kupplungshälfte 16 bzw. 17 eine Stirnwand 35 bzw. 36 auf, mit denen die Kupplungshälften 16 und 17 flächig bzw. formschlüssig aneinander anliegen. In jeder Stirnwand 35 bzw. 36 befindet sich eine Durchtrittsöffnung 37 bzw. 38, die mit Hilfe von je einem Schließkörper 39 bzw. 40 verschließbar ist. Damit die Durchtrittsöffnungen 37 und 38 sowohl luftdicht als auch druckdicht/vakuumdicht verschließbar sind, weisen die Stirnwände 35 und 36 als Begrenzung der Durchtrittsöffnungen 37 und 38 jeweils eine Ventilsitzfläche 41 bzw. 42 für die Schließkörper 39 und 40 auf. Ferner können Dichtungen 43 und 44 im Bereich der Ventilsitzflächen 41 und 42 vorgesehen sein (Fig. 4).

Als Träger für die Schließkörper 39 und 40 dienen gemäß Ausführungsbeispiel jeweils eine Ventilstange 45 bzw. 46. Ferner beaufschlagen jeweils eine Feder 47 bzw. 48 die Schließkörper 39 und 40 mittelbar oder unmittelbar in Schließrichtung auf die Ventilsitzflächen 41, 42 hin.

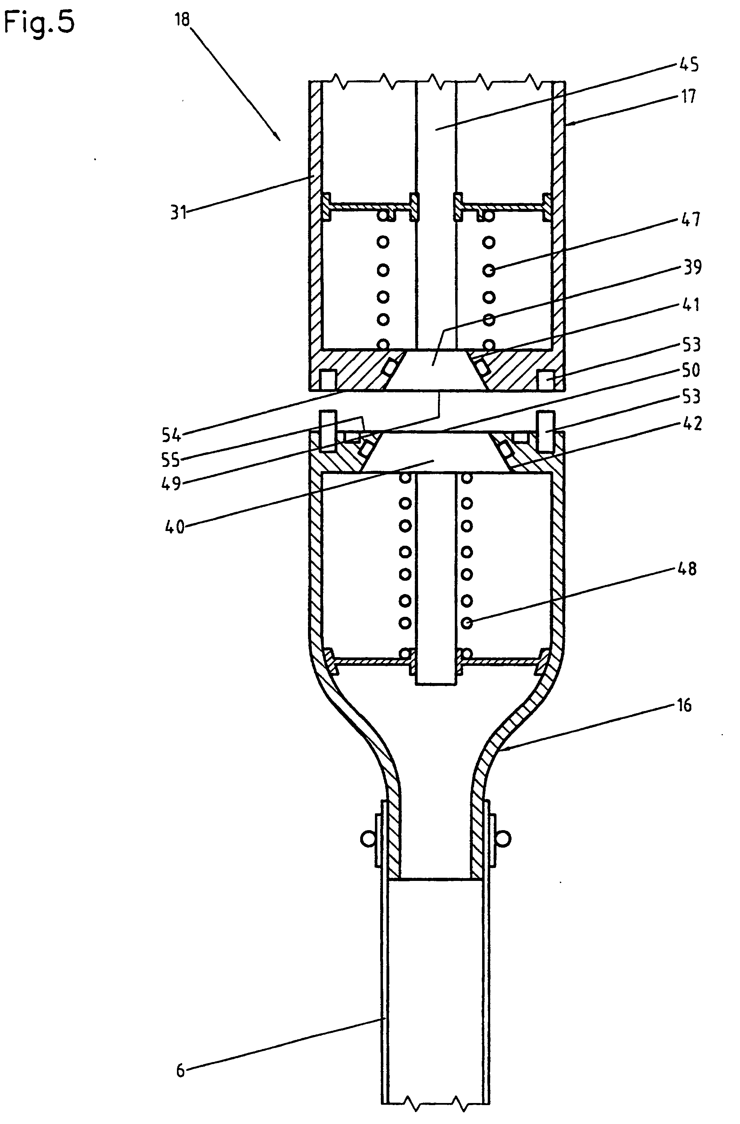

Beide Schließkörper 39, 40 sind gemäß Ausführungsbeispiel kegelstumpfförmig. In der Schließstellung gemäß Fig. 3 und auch in der Öffnungsstellung gemäß Fig. 4 liegen die beiden Schließkörper 39 und 40 mit einander zugewandten Stirnflächen 49, 50 (Fig. 5) vollflächig sowie formschlüssig aneinander an. Auch weisen die beiden Schließkörper 39 und 40 gemäß Ausführungsbeispiel gemeinsam eine kegelstumpfförmige Kontur auf, wobei der eine Schließkörper 39 das sich verjüngende Ende und der andere Schließkörper 40 das breitere Ende der gemeinsamen, kegelstumpfförmigen Kontur bilden. Die beiden einander zugewandten Stirnflächen 49 und 50 der Schließkörper 39 und 40 sind zweckmäßigerweise gleich.

Im geschlossenen Zustand liegen die Schließkörper 39 und 40 mit ihren Stirnflächen 49 und 50 in der Trennfläche 51 der Kupplung 18 bzw. der beiden Kupplungshälften 16 und 17 (Fig. 3). Die Trennfläche 51 ist zweckmäßigerweise eine Ebene und kann eine ebene Kreisfläche sein. Die Trennfläche 51 ist zweckmäßigerweise auch im Bereich der beiden Stirnwände 35 und 36 vollkommen eben, wie dies in den Figuren 3 bis 5 dargestellt ist. Um ein Verbinden der Kupplungshälften 16 und 17 mit Luftabschluß zu erreichen, damit Umgebungsluft beim Verbinden der Kupplungshälften 16 und 17 nicht in das Innere der Leitungen bzw. Komponenten gelangen kann, ist es grundsätzlich nur erforderlich, dass die Schließkörper 39 und 40 in der Schließstellung formschlüssig aneinander anliegen und dass auch die den Schließkörpern radial nach außen benachbarten Teile der Stirnwände 35 und 36 formschlüssig aneinander anliegen.

Ebenso wie Dichtungen 43 und 44 den Schließkörpern 39 und 40 zugeordnet sind, weist auch mindestens eine der beiden Stirnwände 35 und 36 mindestens eine Dichtung 52 auf.

Ferner ist mindestens ein Zentriermittel 53 (Fig. 5) vorgesehen, damit die beiden Kupplungshälften 16 und 17 aus der Öffnungs- oder Trennstellung gemäß Fig. 5 sicher und zuverlässig in die Schließstellung gemäß Fig. 3 gebracht werden können.

Aus der Darstellung in Fig. 5 geht schließlich noch deutlich hervor, dass die beiden Federn 47 und 48 nicht nur die beiden Schließkörper 39 und 40 in Schließrichtung beaufschlagen, sondern dass es sich bei der Feder 48 für den größeren Schließkörper 40 um eine Druckfeder und bei der Feder 47 für den kleineren Schließkörper 39 ebenfalls um eine Druckfeder handelt. Die Konstruktion ist so gewählt, dass der kleinere Schließkörper 39 auf seine Ventilsitzfläche 41 zum Erreichen der Schließstellung gezogen wird, während der größere Schließkörper 40 zum Erreichen der Schließstellung auf seine Ventilsitzfläche 42 gedrückt wird. Die Feder 47 für den kleineren Schließkörper 39 stützt sich an der Stirnwand 35 ab und beaufschlagt eine in dem Gehäuseteil 31 bewegbar angeordnete Führungsscheibe, die starr mit der Ventilstange 45 des kleineren Schließkörpers 39 verbunden ist.

Aufgrund der Gestaltung und Anordnung der Schließkörper 39 und 40 weisen die beiden Kupplungshälften 16 und 17 jeweils integrierte Ventile auf, die vor dem Trennen der Kupplungshälften 16 und 17 geschlossen werden müssen und nach dem Verbinden der Kupplungshälften 16 und 17 wieder geöffnet werden können.

Das Öffnen der beiden Ventile bzw. zum Bewegen beider Schließkörper 39 und 40 aus der Schließstellung gemäß Fig. 3 in die Öffnungsstellung gemäß Fig. 4 ist es nur notwendig, eine Ventilstange, nämlich die Ventilstange 45 in Öffnungsrichtung zu bewegen. Dazu wird die Ventilstange 45 gegen die Kraft der Feder 47 und gegen die Druckkraft der Feder 48 axial verschoben mit der Folge, dass der zur Ventilstange 45 gehörende Schließkörper 39 zugleich den anderen Schließkörper 40 in die Öffnungsstellung bewegt. Zum Schließen drückt die Feder 48 den Schließkörper 40 in seine Schließposition und die Ventilstange 45 zieht den Schließkörper 39 durch die Druckkraft der Feder 47 gleichzeitig in seine Schließposition, wenn die auf die Ventilstange 45 in Öffnungsrichtung wirkende Kraft zurückgenommen wird.

Grundsätzlich können auch eine oder zwei Zugfedern die Druckfedern bei entsprechender Änderung der Konstruktion ersetzen. Die Gestaltung der beiden Kupplungshälften 16 und 17 ist daher nicht auf das konkret dargestellte Ausführungsbeispiel beschränkt, wobei dies insbesondere auch für die Gestaltung der Trennfläche 51 gilt.

Zum druckdichten Verbinden der Kupplungshälften 16 und 17 unter Luftabschluß, so dass keine Umgebungsluft in die Komponenten eindringen kann, ist es zweckmäßig, wenn die einander zugewandten Flächen 54 und 55 der beiden Kupplungshälften 16 und 17 mindestens teilweise spiegelbildlich gleich sind bzw. mindestens teilweise formschlüssig aneinander anliegen oder ineinander greifen.

Um die beiden Schließkörper 39 und 40 bei verbundenen Kupplungshälften 16 und 17 (Fig. 3) zu öffnen, genügt die eine Ventilstange 45, an deren einem Ende der kleine Schließkörper 39 angeordnet ist (Fig. 4). Im geöffneten Zustand geben die beiden Schließkörper 39, 40 einen kegelstumpfförmigen Ringspalt 56 frei, durch den Wasserdampf entweder zum Adsorber 4 oder von dem Adsorber 4 zu dem Kondensator 8 und Wasservorratsbehälter 7 strömen kann.

Um die Ventilstange 45 zu verstellen, kann eine Steuerstange 60 vorgesehen sein, die gemäß dem in Fig. 7 dargestellten Ausführungsbeispiel den Behälter 9 für das Adsorptionsmittel 2 durchgreift und mit der Ventilstange 45 verbunden ist. Eine weitere, ebenfalls den Behälter 9 durchgreifende Steuerstange 61 kann mit der entsprechenden Ventilstange der Kupplungshälfte 17 der Kupplung 19 verbunden sein, die sich in der Leitung 13 befindet. Gemäß Ausführungsbeispiel reichen die Steuerstangen 60 und 61 von einer verformbaren Stirnwand 62 des Behälters 9 bis zu einer anderen, ebenfalls verformbaren Stirnwand 62' und durchgreifen diese gegebenenfalls. Die Steuerstange 61 dient zum Öffnen des zu dem Adsorber 4 gehörenden "Ventils" in der Kupplung 18. Sie bewegt die Schließkörper dieser Kupplung. Um eine Bewegung der Steuerstange 61 zu erreichen, wird die verformbare Stirnwand 62 des Adsorbers 4 bewegt. Die zweite Steuerstange 60 wird ebenso angestoßen wie die Steuerstange 61. Durch sie wird ein Druck auf die zweite, ebenfalls verformbare Stirnwand 62' des Adsorbers ausgeübt. Diese Bewegung führt wiederum zu einer Verstellung einer Ventilstange 72, die das "Auslaßventil" des Wasservorratsbehälters 7 steuert. Entgegen der schematischen Darstellung in Fig. 1 befindet sich hierzu die Kupplung 19 mit ihrer Kupplungshälfte 17 unmittelbar an dem Wasservorratsbehälter 7.

Grundsätzlich werden die in die beiden Kupplungen 18 und 19 integrierten "Ventile" gleichzeitig geöffnet und geschlossen.

Ohne Beeinträchtigung des Adsoptionsmittels 2 in dem Behälter 9 lässt sich der Schließkörper 39 in der Kupplung 18 durch Verformung der Stirnwand 62 in die Öffnungsstellung und in die Schließstellung bewegen.

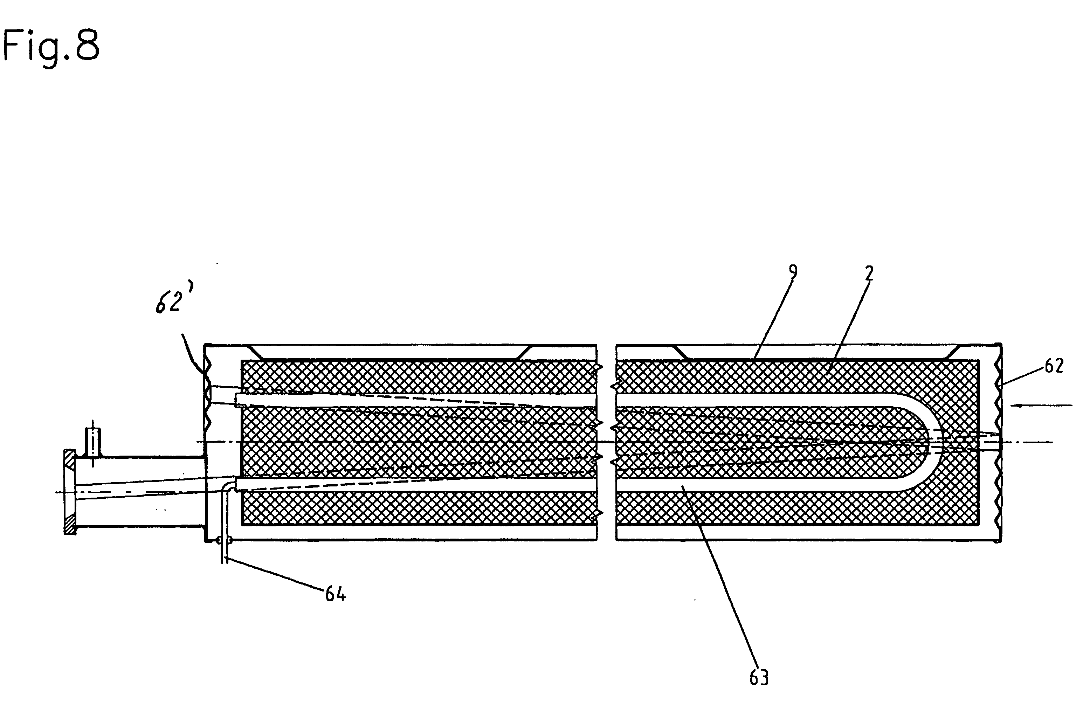

Einzelheiten der in Fig. 2 nur schematisch angedeuteten Heizung 24 gehen aus Fig. 8 hervor. Dort ist eine im Adsorptionsmittel 2 verlegte Heizschlange 63 dargestellt, deren elektrischer Leiter 64 an einer zweckmäßigen Stelle aus dem Behälter 9 herausgeführt ist und z. B. mit der Steuereinrichtung 25 gemäß Fig. 2 verbunden ist.

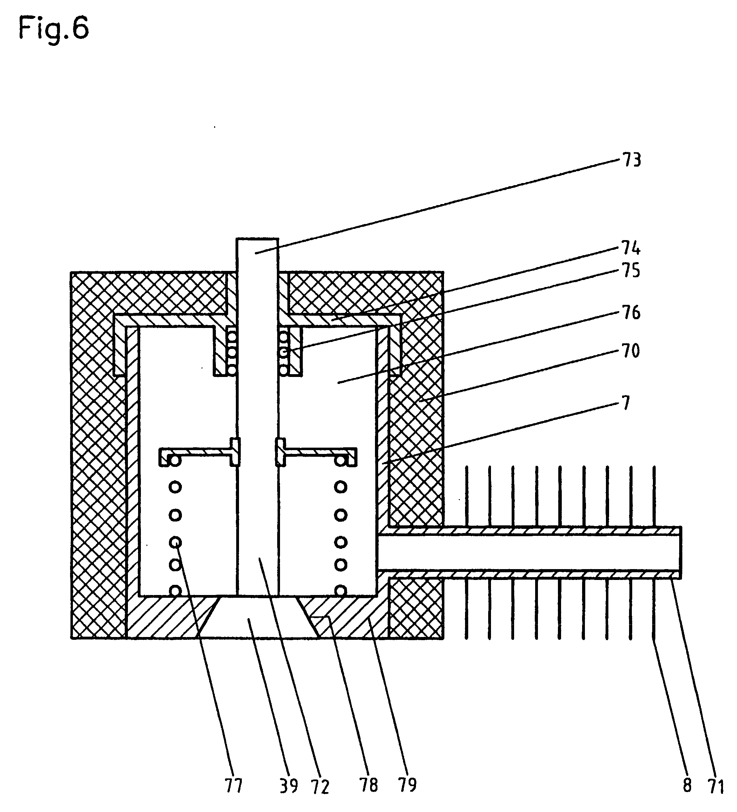

Gemäß einer abgewandelten Ausführungsform ist der Schließkörper 39 in den Wasservorratsbehälter 7 integriert (Fig. 6). Eine geeignete Isolierung 70 umgibt den Wasservorratsbehälter 7. Ein Leitungsstück 71 verbindet den Wasservorratsbehälter 7 mit dem Reaktor bzw. Adsorber 4. Der Schließkörper 39 ist am einen Ende einer Ventilstange 72 angeordnet, deren anderes Ende 73 aus dem Wasservorratsbehälter 7 herausgeführt ist. Das zweite Ende 73 ist daher frei zugänglich.

Die Ventilstange 72 ist in einem Deckel 74 geführt. Dichtungselemente 75 dichten das Innere 76 das Wassersvorratsbehälters 7 im Bereich der Durchführung der Ventilstange 72 gegenüber dem Atmosphärendruck ab. Die Ventilstange 72 in Fig. 6 entspricht der Ventilstange 45 von Fig. 3.

Die Ventilstange 72 ist schließlich mit Hilfe einer Druckfeder 77 derart beaufschlagt, dass der Schließkörper 39 in die Schließstellung gezogen wird. Bei Druck auf das freie Ende 73 der Ventilstange 72 bewegt sich der Schließkörper 39 in die Öffnungsstellung, wobei er sich von einer Ventilsitzfläche 78 in einer Stirnwand 79 des Wasservorratsbehälters 7 abhebt.

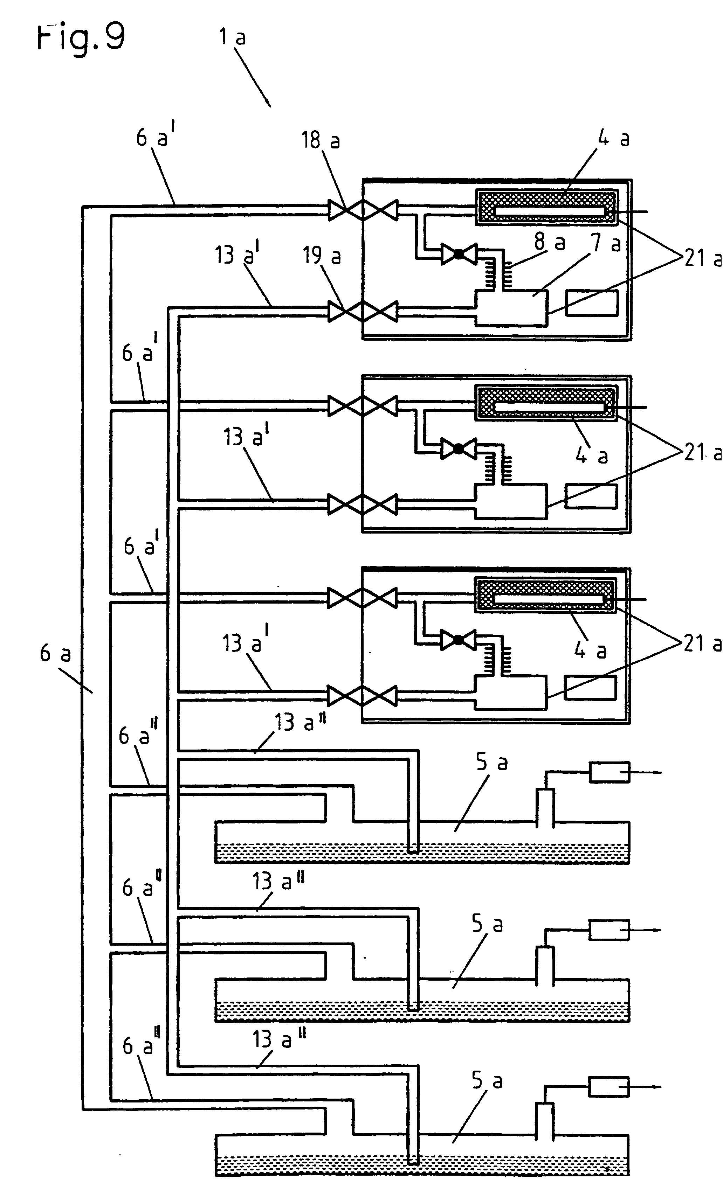

Eine Vorrichtung 1 zum Kühlen muss nicht zwingend gemäß dem in den Figuren 1 und 2 dargestellten Ausführungsbeispiel einen Reaktor bzw. Adsorber 4 und einen Verdampfer 5 bzw. einen Wasservorratsbehälter 7 und einen Kondensator 8 in einem geschlossenen Betriebskreislauf aufweisen, sondern eine Vorrichtung 1a kann auch gemäß Fig. 9 mehrere Reaktoren bzw. Adsorber 4a und mehrere Wasservorratsbehälter 7a mit zugehörigen Kondensatoren 8a und mehrere Verdampfer 5a in beliebiger Anzahl aufweisen. Auch hier sind alle Verdampfer 5a über eine Hauptleitung 6a und Zweigleitungen 6a' mit jeweils einem der Reaktoren bzw. Adsorbern 4a verbunden, wobei Zuführleitungen 6a'' von den Verdampfern 5a zu der Hauptleitung 6a führen. Gleichermaßen sind die Wasservorratsbehälter 7a mit ihren Kondensatoren 8a über eine Hauptleitung 13a mit den Verdampfern 5a verbunden, wobei Zuführleitungen 13a' von den Wasservorratsbehältern 7a und den Kondensatoren 8a zu der Hauptleitung 13a und Zweigleitungen 13a'' von der Hauptleitung 13a zu den Verdampfern 5a führen. Kupplungen 18a und 19a befinden sich jeweils in den Zweigleitungen 6a'und 13a'' sowie in den Zuführleitungen 6a '' und 13a'.

Jeweils ein Reaktor bzw. Adsorber 4a und ein Wasservorratsbehälter 7a und der zugehörige Kondensator 8a bilden eine zusammengehörende Einheit 21a oder Gruppe, die jeweils als Einheit 21a an die Hauptleitungen 6a und 13a angekoppelt oder von diesen mit Hilfe der Kupplungen 18a und 19a getrennt werden können.

Auch die Verdampfer 5a bilden zusammen eine Einheit oder Gruppe, die gemeinsam an die Hauptleitungen 6a und 13a angeschlossen sind und immer nur gemeinsam und gleichzeitig in dem Betriebskreislauf wirksam sind.

Die Adsorber 4a und die Verdampfer 5a sowie die Wasservorratsbehälter 7a und die Kondensatoren 8a stellen jeweils Komponenten der Vorrichtung 1a dar, die einzeln oder als Komponentengruppen jeweils druckdicht und unter Luftabschluß miteinander verbunden oder voneinander getrennt werden. Das Trennen der Komponenten bedeutet dabei ferner, dass sie nach dem Trennungsvorgang auch körperlich voneinander entfernt werden, damit der Desorbtionsvorgang an einer anderen Stelle durchgeführt werden kann.

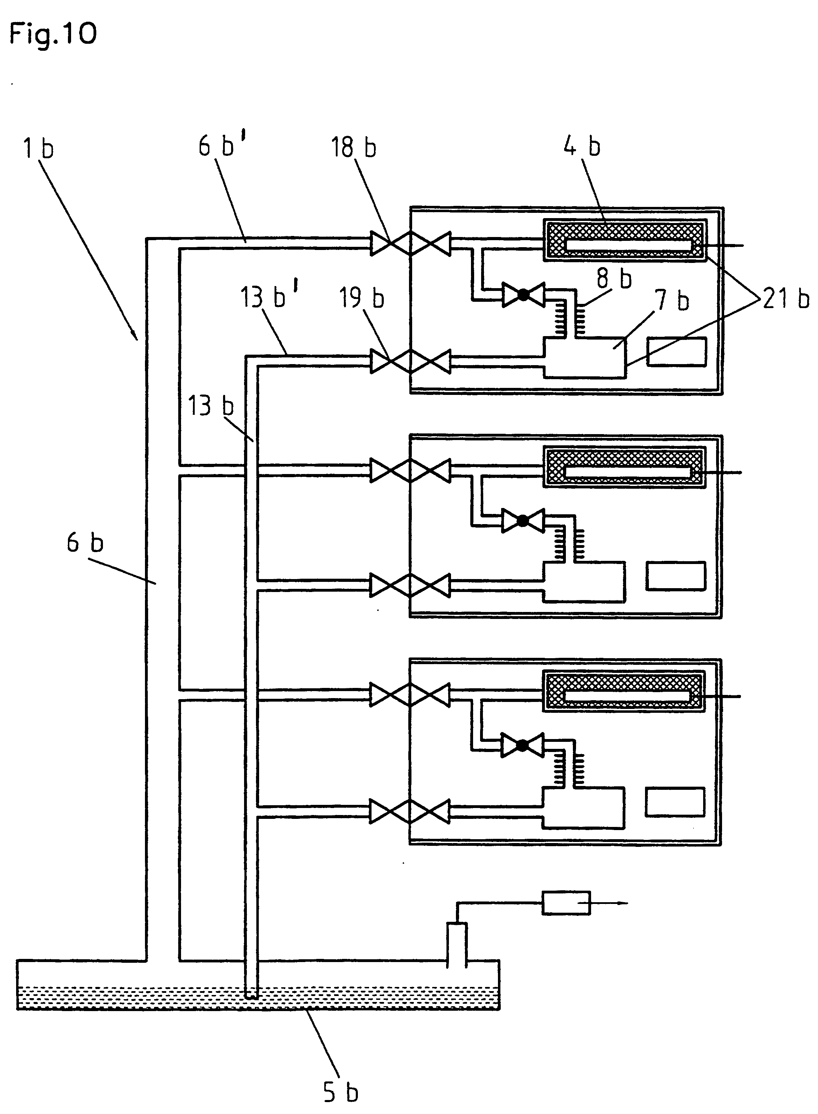

Ein letztes Ausführungsbeispiel von einer Vorrichtung 1b ist in Fig. 10 dargestellt und umfaßt einen Verdampfer 5b, mit dem über Hauptleitungen 6b und 13b mehrere aus Reaktor bzw. Adsorber 4b und Wasservorratsbehälter 7b und Kondensator 8b bestehende Einheiten 21b für die Adsorption verbindbar und für die Desorption trennbar sind. Auch hierzu dienen Kupplungen 18b und 19b in den Zweigleitungen 6b' und in den Zuführleitungen 13b'. Die Komponenten der Vorrichtung 1b sind daher ebenfalls einzeln und/oder in Gruppen druckdicht und unter Luftabschluß miteinander verbindbar und voneinander lösbar.

Die Erfindung ist nicht auf die in den Figuren im wesentlichen schematisch dargestellten Ausführungsbeispiele beschränkt, vielmehr sind auch noch Abwandlungen möglich, ohne von dem in den Ansprüchen definierten Erfindungsgedanken abzuweichen. Dazu gehört insbesondere auch, dass die Form und Gestalt der Ventilteller bzw. Schließkörper 39 und 40 nicht zwingend kegelstumpfförmig sein muss. Grundsätzlich sind auch andere Gestaltungen möglich, wobei entscheidend ist, dass die Kupplungshälften mit ihren jeweils integrierten Ventilen totraumfrei schließen.

## Patentansprüche

1. Verfahren zum Betreiben einer Kühleinrichtung (1) mit einem Adsorptionsmittel (2) enthaltenden Reaktor (4), einem Flüssigkeit (3) enthaltenden Verdampfer (5), einer Reaktor (4) und Verdampfer (5) verbindenden vakuumdichten Leitung (6, 33) mit wenigstens einer Kupplungseinrichtung (18, 19)zum wahlweisen Abtrennen oder Anschließen des Reaktors (4) und/oder des Verdampfers (5) und einem angeschlossenen Unterdruckerzeuger (20), bei dem im Wechsel das Adsorptionsmittel (2) erwärmt und dadurch unter Austreiben der Flüssigkeit regeneriert wird und die Flüssigkeit (3) unter Erzeugung von Kälte verdampft wird, und anschließend mit Hilfe von mindestens einem Kondensator (8) kondensiert wird **dadurch gekennzeichnet, dass** das Abtrennen und das Anschließen des Reaktors (4) und/oder des Verdampfers (5) zwischen der Regenerationsphase und der Kühlphase so durchgeführt wird, dass dabei keine Umgebungsluft in die Kühleinrichtung (1) oder ihre Teile (4, 5, 6) eintritt, wozu vor dem Abtrennen des Reaktors (4) und/oder des Verdampfers (5) die aneinander anliegenden Enden der Leitungen (6, 33) in ihrer Trennebene (51) totraumfrei abgedichtet werden.

2. Verfahren nach Anspruch 1 bei einer Kühleinrichtung (1), die auch einen über eine Absaugleitung (11) mit dem Reaktor (4) verbundenen Wasservorratsbehälter (7) aufweist, dem ein Kondensator (8) zugeordnet und der über eine Rückleitung (13) mit dem Verdampfer (5) verbunden ist, **dadurch gekennzeichnet, dass** auch die Rückleitung (13) beim Abtrennen und Anschließen des Reaktors (4) getrennt und verbunden und dabei wie die Leitung (6, 33) vor einem Eindringen von Umgebungsluft geschützt wird.

3. Kühleinrichtung zur Durchführung des Verfahrens nach Anspruch 1 mit einem Adsorptionsmittel (2) enthaltenden Reaktor (4), einem Flüssigkeit (3) enthaltenden Verdampfer (5), mindestens einem Kondensator, einer Reaktor (4) und Verdampfer (5) verbindenden vakuumdichten Leitung (6, 33) mit wenigstens einer Kupplungseinrichtung (18, 19) und einem angeschlossenen Unterdruckerzeuger (20), **dadurch gekennzeichnet, dass** den mittels der Kupplungseinrichtung (18, 19) zu trennenden oder zu verbindenden Enden der beiden Leitungen (6, 33) jeweils eine Kupplungshälfte (16, 17) mit einem Ventilsitz (41, 42) und einem Schließkörper (39, 40) zugeordnet ist, der in seiner Schließstellung (Fig. 3) die Durchtrittsöffnung (37, 38) totraumfrei in der Trennfläche (51) der Kupplungshälften (16, 17) verschließt.

4. Kühleinrichtung nach Anspruch 3, mit einem über eine Absaugleitung (11) mit dem Reaktor (4) insbesondere zu einer Einheit (21) verbundenen Wasservorratsbehälter (7), dem ein Kondensator (8) zugeordnet und der über eine Rückleitung (13) mit dem Verdampfer (5) verbunden ist, **dadurch gekennzeichnet, dass** die Rückleitung (13) eine Trennstelle mit Kupplungshälften (16, 17) an den Leitungsenden aufweist, die ebenfalls einen Ventilsitz (41, 42) und einen Schließkörper (39, 40) aufweisen, der in seiner Schließstellung die jeweilige Leitungsöffnung (37, 38) totraumfrei in der Trennfläche (51) der Kupplungshälften (16, 17) verschließt.

5. Kühleinrichtung nach Anspruch 3 oder 4, **dadurch gekennzeichnet, dass** die einander zugewandten Flächen (54, 55) der Kupplungshälften (16, 17) mindestens teilweise spiegelbildlich gleich sind.

6. Kühleinrichtung nach einem der Ansprüche 3 bis 5, **dadurch gekennzeichnet, dass** die einander zugewandten Flächen (54, 55) der Kupplungshälften (16, 17) und/oder die einander zugewandten Stirnflächen (49, 50) der Schließkörper (39, 40) der Kupplungshälften (16, 17) jeweils mindestens teilweise formschlüssig sind.

7. Kühleinrichtung nach einem der Ansprüche 3 bis 6, **dadurch gekennzeichnet, dass** jeder Schließkörper (39, 40) von einer Feder (47, 48) in Schließrichtung beaufschlagt ist.

8. Kühleinrichtung nach einem der Ansprüche 3 bis 7, **dadurch gekennzeichnet, dass** die Schließkörper (39, 40) jeweils kegelstumpfförmig sind.

9. Kühleinrichtung nach einem der Ansprüche 3 bis 8, **dadurch gekennzeichnet, dass** die Schließkörper (39, 40) in der Schließstellung zusammen eine kegelstumpfförmige Kontur aufweisen.

10. Kühleinrichtung nach einem der Ansprüche 3 bis 9, **dadurch gekennzeichnet, dass** die Schließkörper (39, 40) der Kupplungshälften (16, 17) in der Schließstellung mit Stirnflächen (49, 50) aneinander anliegen.

11. Kühleinrichtung nach einem der Ansprüche 3 bis 10, **dadurch gekennzeichnet, dass** die Schließkörper (39, 40) gemeinsam bewegbar sind.

12. Kühleinrichtung nach einem der Ansprüche 3 bis 11, **dadurch gekennzeichnet, dass** mindestens einem der beiden Schließkörper (39, 40) eine Ventilstange (45, 46) zugeordnet ist.

13. Kühleinrichtung nach einem der Ansprüche 3 bis 12, **dadurch gekennzeichnet, dass** beim Öffnen der eine Schließkörper (40) mit Hilfe des anderen Schließkörpers (39) in die Öffnungsstellung bewegbar ist.

14. Kühleinrichtung nach einem der Ansprüche 3 bis 13 **dadurch gekennzeichnet, dass** die Schließkörper (39, 40) zum Bewegen in Öffnungsrichtung über eine Ventilstange (45) verlagerbar sind.

15. Kühleinrichtung nach Anspruch 14, **dadurch gekennzeichnet, dass** die zum Öffnen der Schließkörper (39, 40) dienende Ventilstange (45) mit einer Steuerstange (60) verbunden ist, die mindestens eine der Komponenten (4) der Kühleinrichtung (1) durchgreift.

## Claims

1. Method of operating cooling equipment (1), comprising a reactor (4) containing adsorption means (2), an evaporator (5) containing a liquid (3), a vacuum-tight line (6, 33), which connects the reactor (4) and evaporator (5), with at least one coupling device (18, 19) for selectable isolation or connection of the reactor (4) and/or evaporator (5) and a connected underpressure producer (20) in which in alternation the adsorption means (2) is heated and thereby regenerated with expulsion of the liquid and the liquid (3) is evaporated with generation of coldness and subsequently is condensed with the help of at least one condenser (8), **characterised in that** the isolation and connection of the reactor (4) and/or the evaporator (5) between the regeneration phase and the cooling phase is carried out in such a manner that **in that** case no ambient air enters the cooling equipment (1) or parts (4, 5, 6) thereof, for which purpose before isolating the reactor (4) and/or the evaporator (5) the mutually adjacent ends of the lines (6, 33) are sealed off in the plane of separation (51) thereof without formation of a dead space.

2. Method according to claim 1 with cooling equipment (1) which also comprises a water storage container (7) which is connected with the reactor (4) by way of a suction line (11) and is associated with a condenser (8) and which is connected with the evaporator (5) by way of a return line (13), **characterised in that** the return line (13) is also separated and connected when the reactor (4) is isolated and connected and **in that** case is protected like the line (6, 33) against penetration of ambient air.

3. Cooling equipment for carrying out the method according to claim 1, comprising a reactor (4) containing adsorption means (2), an evaporator (5) containing a liquid (3), at least one condenser, a vacuum-tight line (6, 33), which connects the reactor (4) and evaporator (5), with at least one coupling device (18, 19) and a connected underpressure producer (20), **characterised in that** the ends, which are to be separated or connected by means of the coupling device (18, 19), of the two lines (6, 33) are each associated with a respective coupling half (16, 17) with a valve seat (41, 42) and a closure body (39, 40) which in a closed setting (Fig. 3) thereof closes the passage opening (37, 38), without formation of a dead space, in the separating area (51) of the coupling halves (16, 17).

4. Cooling equipment according to claim 3, comprising a water storage container (7) which is connected with the reactor (4) by way of a suction line (11) particularly to form a unit (21) and is associated with a condenser (8) and which is connected with the evaporator (5) by way of a return line (13), **characterised in that** the return line (13) has a separating point with coupling halves (16, 17) at the line ends, which similarly have a valve seat (41, 42) and a closure body (39, 40) which in a closed setting thereof closes the respective line opening (37, 38), without formation of a dead space, in the separating area (51) of the coupling halves (16, 17).

5. Cooling equipment according to claim 3 or 4, **characterised in that** the mutually facing surfaces (54, 55) of the coupling halves (16, 17) are at least partly the same in mirror image.

6. Cooling equipment according to one of claims 3 to 5, **characterised in that** the mutually facing surfaces (54, 55) of the coupling halves (16, 17) and/or the mutually facing end faces (49, 50) of the closure bodies (39, 40) of the coupling halves (16, 17) are at least partly shape-locking.

7. Cooling equipment according to one of claims 3 to 6, **characterised in that** each closure body (39, 40) is acted on in closing direction by a spring (47, 48).

8. Cooling equipment according to one of claims 3 to 7, **characterised in that** the closure bodies (39, 40) are each frusto-conical in shape.

9. Cooling equipment according to one of claims 3 to 8, **characterised in that** the closure bodies (39, 40) together have a frusto-conical contour in closing direction.

10. Cooling equipment according to one of claims 3 to 9, **characterised in that** the closure bodies (39, 40) of the coupling halves (16, 17) bear against one another by end faces (49, 50) in the closed setting.

11. Cooling equipment according to one of claims 3 to 10, **characterised in that** the closure bodies (39, 40) are movable in common.

12. Cooling equipment according to one of claims 3 to 11, **characterised in that** a valve rod (45, 46) is associated with at least one of the two closure bodies (39, 40).

13. Cooling equipment according to one of claims 3 to 12, **characterised in that** during opening one closure body (40) is movable into the open setting with the help of the other closure body (39).

14. Cooling equipment according to one of claims 3 to 13, **characterised in that** the closure bodies (39, 40) are displaceable by way of a valve rod (45) for movement in the direction of opening.

15. Cooling equipment according to claim 14, **characterised in that** the valve rod (45) serving for opening the closure bodies (39, 40) is connected with a control rod (60) which engages through at least one of the components (4) of the cooling equipment (1).

## Revendications

1. Procédé de fonctionnement d'une installation de réfrigération (1) avec un réacteur (4) contenant un moyen d'adsorption (2), un évaporateur (5) contenant un liquide (3), une conduite (6, 33) étanche au vide reliant le réacteur (4) et l'évaporateur (5) avec au moins une installation de couplage (18,19) pour la séparation ou la connexion sélectives du réacteur (4) et/ou de l'évaporateur (5) et un générateur de dépression connecté (20), où alternativement le moyen d'adsorption (2) est chauffé et, de ce fait, en chassant le liquide, est régénéré, et le liquide (3) en produisant du froid est amené à s'évaporer, et est condensé ensuite à l'aide d'au moins un condenseur (8), **caractérisé en ce que** la séparation et la connexion du réacteur (4) et/ou de l'évaporateur (5) entre la phase de régénération et la phase de réfrigération sont exécutées de façon que ce faisant, de l'air ambiant n'entre pas dans l'installation de réfrigération (1) ou ses parties (4,5,6), à cette fin, avant la séparation du réacteur (4) et/ou de l'évaporateur (5), les extrémités juxtaposées des conduites (6,33) sont rendues étanches dans leur plan de séparation (51) d'une manière exempte d'espaces morts.

2. Procédé selon la revendication 1, dans une installation de réfrigération (1) qui présente également un réservoir d'eau (7) relié par un conduit d'aspiration (11) au réacteur (4), auquel est associé un condenseur (8) et qui est relié par un conduit de retour (13) à l'évaporateur (5), **caractérisé en ce que** le conduit de retour (13) également lors de la séparation et de la connexion du réacteur (4), est séparé et connecté et est protégé dans ce cas comme la conduite (6,33) contre une pénétration de l'air ambiant.

3. Installation de réfrigération pour l'exécution du procédé selon la revendication 1 avec un réacteur (4) contenant un moyen d'adsorption (2), un évaporateur (5) contenant du liquide (3), au moins un condenseur, une conduite (6,33) étanche au vide reliant le réacteur (4) et l'évaporateur (5), avec au moins une installation de couplage (18,19) et un générateur de dépression connecté (20), **caractérisé en ce qu'**il est associé aux extrémités des deux conduites (6,33) à séparer ou à relier au moyen de l'installation de couplage (18,19) à chaque fois une moitié de couplage (16,17) avec un siège de vanne (41,42) et un corps de fermeture (39,40) qui, dans sa position de fermeture (figure 3) ferme l'ouverture de passage (37,38) d'une manière exempte d'espaces morts dans la face de séparation (51) des moitiés de couplage (16,17).

4. Installation de réfrigération selon la revendication 3, avec un réservoir d'eau (7) relié par un conduit d'aspiration (11) au réacteur (4), en particulier en une unité (21), auquel est associé un condenseur (8), et qui est relié par un conduit de retour (13) à l'évaporateur (5), **caractérisée en ce que** le conduit de retour (13) présente un emplacement de séparation avec des moitiés de couplage (16,17) aux extrémités de conduit, qui présentent également un siège de soupape (41,42) et un corps de fermeture (39,40) qui, dans sa position de fermeture, ferme l'ouverture de conduit respective (37,38) d'une manière exempte d'espaces morts dans la face de séparation (51) des moitiés de couplage (16,17).

5. Installation de réfrigération selon la revendication 3 ou 4, **caractérisée en ce que** les faces (54,55) orientées l'une vers l'autre des moitiés de couplage (16,17) sont au moins partiellement spéculairement identiques.

6. Installation de réfrigération selon l'une des revendications 3 à 5, **caractérisée en ce que** les faces (54, 55) des moitiés de couplage (16,17) orientées l'une vers l'autre et/ou les faces frontales (49,50) orientées l'une vers l'autre des corps de fermeture (39,40) des moitiés de couplage (16,17) sont réalisées chacune au moins partiellement avec une concordance des formes.

7. Installation de réfrigération selon l'une des revendications 3 à 6, **caractérisée en ce que** chaque corps de fermeture (39,40) est chargé par un ressort (47,48) dans la direction de fermeture.

8. Installation de réfrigération selon l'une des revendications 3 à 7, **caractérisée en ce que** les corps de fermeture (39,40) sont réalisés chacun en une forme tronconique.

9. Installation de réfrigération selon l'une des revendications 3 à 8, **caractérisée en ce que** les corps de fermeture (39,40), en position de fermeture, ont ensemble un contour tronconique.

10. Installation de réfrigération selon l'une des revendications 3 à 9, **caractérisée en ce que** les corps de fermeture (39,40) des moitiés de couplage (16,17), en position de fermeture, s'appliquent avec des faces frontales (49,50) l'un à l'autre.

11. Installation de réfrigération selon l'une des revendications 3 à 10, **caractérisée en ce que** les corps de fermeture (39,40) sont déplaçables conjointement.

12. Installation de réfrigération selon l'une des revendications 3 à 11, **caractérisée en ce qu'**il est associé à au moins l'un des deux corps de fermeture (39,40) une tige de soupape (45,46).

13. Installation de réfrigération selon l'une des revendications 3 à 12, **caractérisée en ce que** lors de l'ouverture, un corps de fermeture (40) est déplaçable à l'aide de l'autre corps de fermeture (39) dans la position d'ouverture.

14. Installation de réfrigération selon l'une des revendications 3 à 13, **caractérisée en ce que** les corps de fermeture (39,40), pour un déplacement dans la direction d'ouverture, sont déplaçables par une tige de soupape (45).

15. Installation de réfrigération selon la revendication 14, **caractérisée en ce que** la tige de soupape (45) servant à l'ouverture des corps de fermeture (39,40) est reliée à une tige de commande (60) qui passe à travers au moins l'un des composants (4) de l'installation de réfrigération (1).
